# EUROPEAN PATENT SPECIFICATION

(11) **EP 1 316 750 B1**
(45) Date of publication and mention of the grant of the patent: **29.09.2004**
(21) Application number: 02026891.8
(22) Date of filing: 02.12.2002
(51) Int. Cl.: F16K 31/06, F16K 3/26, F16K 1/12

(54) **Proportional solenoid valve**
Proportionales Magnetventil
Soupape magnétique proportionelle

(30) Priority: 03.12.2001 JP 2001368486
(43) Date of publication of application: 04.06.2003
(73) Proprietor: TGK Co., Ltd., Hachioji-shi, Tokyo 193-0942 (JP)
(72) Inventor: Hirota, Hisatoshi, TGK Co., Ltd., Hachioji-shi, Tokyo 193-0942 (JP); Koyama, Katsumi, TGK Co., Ltd., Hachioji-shi, Tokyo 193-0942 (JP); Inoue, Yuusuke, TGK Co., Ltd., Hachioji-shi, Tokyo 193-0942 (JP); Tsugawa, Tokumi, TGK Co., Ltd., Hachioji-shi, Tokyo 193-0942 (JP); Shiota, Toshiyuki, TGK Co., Ltd., Hachioji-shi, Tokyo 193-0942 (JP)
(74) Representative: Grünecker, Kinkeldey, Stockmair & Schwanhäusser Anwaltssozietät

(56) References cited:
- EP-A- 0 339 339
- US-A- 4 339 109
- US-A- 5 460 349
- US-A- 5 897 098

## Description

This invention relates to a proportional solenoid valve according to the preamble part of claim 1.

A known proportional solenoid valve comprises a valve section for opening and closing a fluid passage through a valve seat by a valve element arranged at one side of the valve seat, and a solenoid section for actuating the valve element to and/or away from the valve seat. The component parts of the valve section and the solenoid section are formed or mounted in a body formed by machining a block body. The valve section has two bored ports, the valve seat integrally formed with the body between the two ports, and the valve element. The solenoid section includes a solenoid coil, a core fixedly arranged on the same axis as the valve element and the valve seat, and an axially moveable plunger to actuate the valve element. A spring is arranged between the plunger and the valve element and urges the plunger away from the core. Since the valve element is arranged upstream or downstream of the valve seat with respect to a given fluid flow direction, any fluid pressure applied to the valve element acts either in the valve closing or the valve opening direction. The resulting characteristic of the valve lift in relation to the curve of the solenoid force varies in dependence from the fluid flow direction. For this reason, the proportional solenoid valve is given a directional property related to the fluid flow direction, i.e. the valve has to be designed in adaptation to the fluid flow direction. The body in the form of a block with the two ports, and the mounted component parts of the valve section, and the solenoid section for opening and closing the valve element of the valve section, need an undesirably increased size of the entire proportional solenoid valve. If this proportional solenoid valve is employed for an application where the direction of the fluid flow may be reversed, two parallel pairs of a proportional solenoid valve and a check valve are required to cope with both fluid flow directions. This even causes a further increased size of the proportional solenoid valve.

It is an object of the present invention to provide a small-sized and low-cost proportional solenoid valve which is capable of controlling bidirectional fluid flows, i.e. of controlling fluid flows with at least substantially the same valve operation characteristics irrespective of the fluid flow direction through the valve.

Since the pipe through which the fluid flows is used as the valve body, and the core used for opening and closing the valve, the shaft formed with the valve holes, the hollow cylindrical valve element, the spring, and the plunger, all are arranged within the pipe, it is possible to reduce the number of component parts and the overall valve size, which contributes to a reduction of manufacturing costs including machining costs and material costs. Since the hollow cylindrical valve element opens and closes the laterally extending valve holes formed in the shaft, fluid flow does not load the hollow cylindrical valve element by pressure forces neither in the valve opening direction nor in the valve closing direction, (pressure compensated valve element). This allows to control bidirectional fluid flows essentially in the same manner. As the operation of the hollow cylindrical valve element is not adversely affected by axial fluid pressure influences, the proportional solenoid valve is capable of controlling flow rates of bidirectional fluid flows. This allows to widely use the proportional solenoid valve in various systems. When the hollow cylindrical valve element is of non-magnetic material, it is easily possible to prevent dirt or of magnetic materials from to deposit on the valve element. This improves the sealability and durability of the proportional solenoid valve.

In case that springs are used which load the hollow cylindrical valve element in both axial directions, the valve opening operation can be initiated with small electric current, while simultaneously the communication between the opposite ends of the pipe is maintained reliably.

Document US A 4 339 109 shows a valve with the features disclosed in the preamble of claim 1.

Embodiments of the present invention will be described with reference to drawings. In the drawings is:
- Fig. 1: a cross-sectional view of a first embodiment of a proportional solenoid valve in a non-energized state,
- Fig. 2: a cross-sectional view of the solenoid valve of Fig. 1 in an energized state,
- Fig. 3: a graph of a current valve-lift characteristic,
- Fig. 4: a graph of a current-lift characteristic of a conventional proportional solenoid valve,
- FIG. 5: a diagram of a refrigeration cycle for cooling only,
- Fig. 6: a diagram explaining a refrigeration cycle for selectively cooling and heating,
- Fig. 7: a cross-sectional view of a second embodiment of a proportional solenoid valve,
- Fig. 8: a cross-sectional view of the proportional solenoid valve of Fig. 7 in an energized state,
- Fig. 9: a cross-sectional view of the proportional solenoid valve of Fig. 8 in a non-energized state.
- Fig. 10: a plan view of the proportional solenoid valve of Figs 8, 9,
- Fig. 11: a cross-sectional view of a fourth embodiment of a proportional solenoid valve, in a non-energized state,
- Fig. 12: a cross-sectional view of the Fig. 11 proportional solenoid valve in a position rotated about the axis by 90°,
- Fig. 13: a cross-sectional view of the proportional solenoid valve of Fig. 11, in an energized state.
- Fig. 14: a cross-sectional view of the Fig. 13 proportional solenoid valve in a position rotated by 90°,
- Fig. 15: a perspective view of the proportional solenoid valve of Fig. 11 in the non-energized state,
- Fig. 16: a sectional view taken on line A-A of Fig. 15,
- Fig. 17: a perspective view of the proportional solenoid valve of Fig. 10 in the energized state,
- Fig. 18: a sectional view taken on line B-B of Fig. 17,
- Fig. 19: a cross-sectional view of a fifth embodiment of a proportional solenoid valve,
- Fig. 20: a cross-sectional view of a sixth embodiment of a proportional solenoid valve in a non-energized state,
- Fig. 21: a perspective view of the proportional solenoid valve of Fig. 20 in the non-energized state,
- Fig. 22: a cross-sectional view of the proportional solenoid valve of Fig. 20 in an energized state,
- Fig. 23: a perspective view of the proportional solenoid valve of Fig. 20 in the energized state,
- Fig. 24: a graph of the ratio between an outer-diametric cross-sectional area of an end of a hollow cylindrical valve element and plunger and a spring constant, and
- Fig. 25: a diagram of the current-lift characteristic of the proportional solenoid valve of Fig. 20.

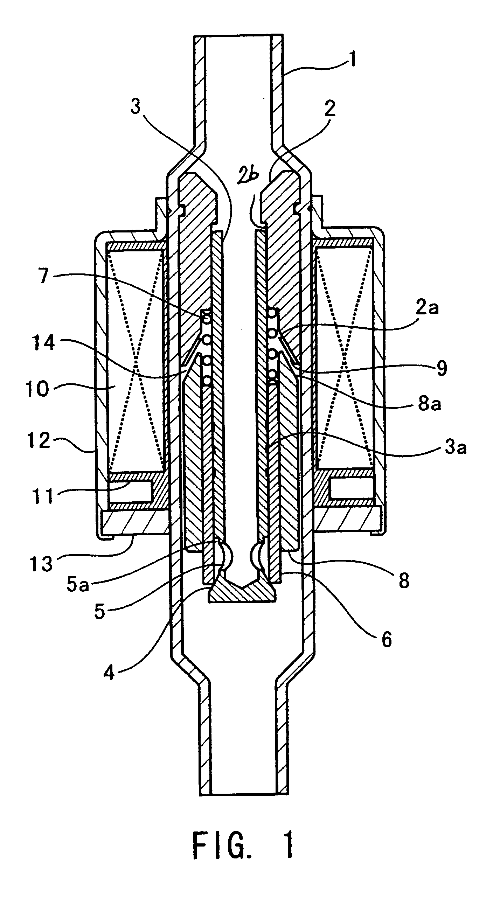

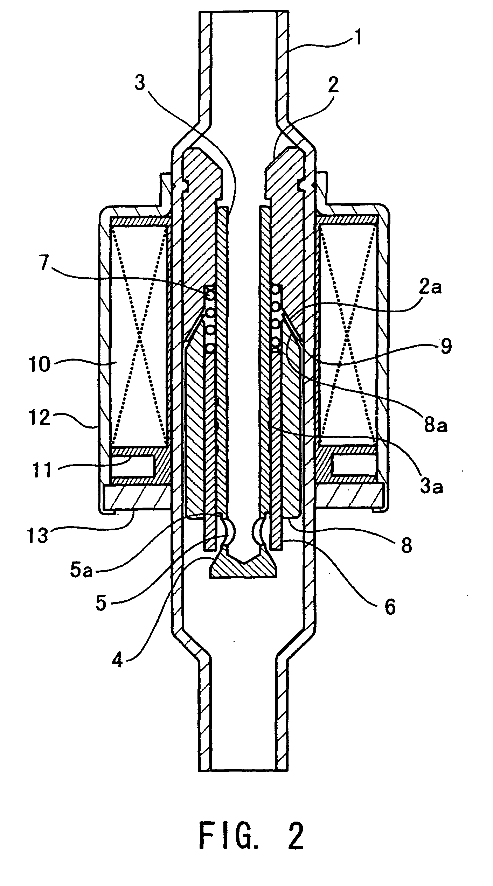

The proportional solenoid valve of Figs 1 and 2 has a body formed by a straight hollow cylindrical pipe 1 both ends of which are open. Within the pipe 1, there is arranged a hollow cylindrical core 2 formed therethrough with a fluid passage extending axially. The core 2 is axially secured in the pipe 1 at a first axial position e.g. by press-fitting, preferably additively by crimping the pipe into a circumferential groove of the core 2.

A hollow shaft 3 is arranged in the fluid passage of the core 2. The hollow shaft 3 has one end thereof e.g. press-fitted at a second axial position in the fluid passage of the core 2, particularly in a stepped inner bore 2b of the core 2. The stepped bore 2b defines a mounting facility for the shaft 3, such that the second axial position of the shaft 3 selectively may be varied in relation to the to the first axial position to adjust the desired valve lift amount, when mounting the shaft in the core. The shaft 3 has at the other end an integrally formed conically tapered valve seat 4, the diameter of which increasing toward the extremity of the other shaft end. The shaft 3 has a plurality of lateral valve holes 5 distributed over the circumference adjacent to the valve seat 4.
On the outer peripheral surface of a portion of the shaft close to the valve holes 5 a circumferential communication groove 5a is formed.

A hollow, sleeve-like cylindrical valve element 6 of a non-magnetic material is arranged between the core 2 and the valve seat 4. It is axially movable using the shaft 3 as a guide. Where the shaft 3 guides the hollow cylindrical valve element 6 a plurality of circumferential sealing grooves 3a is formed e.g. in the sliding surface. A spring 7 between the hollow cylindrical valve element 6 and the core 2 urges the hollow cylindrical valve element 6 in the axial direction to the valve seat 4. A hollow cylindrical plunger 8 is fixedly fitted on the hollow cylindrical valve element 6 to perform axial motion together with the valve element 6. The plunger 8 has an outer diameter such that a predetermined radial gap remains between the inner wall of the pipe 1 and the plunger 8, so that equal fluid pressures act at both axial essentially equally dimensioned end faces of the plunger 8.

The core 2 and the plunger 8 have respective tapered end faces 2a, 8a opposed to each other with identical slope gradients to improve linearity of attraction characteristics in case of an applied electric current. The end face 2a of the core 2 carries a conical washer 9 of non-magnetic material to suppress attraction of the plunger 8 to the core 2 by residual magnetism when the demagnetized end face 8a of the plunger 8 is in contact with the washer 9.

Fitted on the outer peripheral surface of the pipe 1 is a bobbin 11 carrying a solenoid coil 10. The bobbin 11 is surrounded by a first yoke 12 which has an upper end portion thereof mounted on the pipe 1 to cover the outside of the bobbin 11. The lower end of the first yoke 12 is closed by a second yoke 13 to form a continuous magnetic circuit.

The pipe 1 has both ends open which are formed e.g., by drawing processes, to fit to the diameters of mating pipes to which the pipe 1 is to be welded for e.g. integrating the proportional solenoid valve in a piping system.

In the magnetic circuit the core 2 functions as a fixed iron core and the plunger 8 as a movable iron core.

In the non-energized state, the hollow cylindrical valve element 6 and the plunger 8 are moved by the spring 7until the hollow cylindrical valve element 6 is seated on the valve seat 4. The valve holes 5 and the communication groove 5a are closed, whereby the fluid passage is blocked. Fluid may be present in the interior of the shaft 3, but cannot reach the lower open end of the pipe 1. If fluid flows into the pipe 1 via the lower open end, the fluid flows through the gap between the pipe 1 and the plunger 8 and into a space 14 between the end face 2a of the core 2 and the end face 8a of the plunger 8. This causes equal fluid pressures to act at both ends of the plunger 8 and of the hollow cylindrical valve element 6. This pressure compensated state prevents adverse effects for the valve opening/closing operations by the pressure of the fluid. This also allows to maintain the valve closed only by the spring 7.

Upon energization with maximum current, the plunger 8 is attracted toward the core 2 against the force of the spring 7 (fig. 2). The end face 8a of the plunger 8 contacts the washer 9. The hollow cylindrical valve element 6 moves together with the plunger 8 to gradually open the valve holes 5 and the communication groove 5a and to allow communication between both open ends of the pipe 1. When fluid flows into the pipe 1 from the upper open end in the figure, the fluid passes through the fluid passage in the shaft 3 to enter the communication groove 5a via the valve holes 5. After filling the whole communication groove 5a, the fluid flows toward the lower open end of the pipe via a space between the conical tapered valve seat 4 and the end face of the hollow cylindrical valve element 6. Similarly, when fluid enters via the lower open end as the fluid enters the communication groove 5a via the space between the conical tapered valve seat 4 and the end face of the hollow cylindrical valve element 6. Then, the fluid enters the fluid passage in the shaft 3 via the valve holes 5 and flows toward the upper open end of the pipe 1.

When the value of electric current supplied to the solenoid coil 10 is changed, the plunger 8 stops at a certain axial position, namely when the attractive force of the core 2 and the urging force of the spring 7 are balanced, depending on the current value. This allows to set a desired valve lift amount corresponding to the chosen current value.

The opening degree of the valve holes 5 and that of the communication groove 5a or the maximum valve lift amount in the fully energized state may be selected by changing the second axial position of the press-fitting of the shaft 3 in the cored 2.
The shaft 3 is press-inserted into the fluid passage of the core 2 and is secured to the inner wall of the core. By selecting the second axial position of the shaft 3 it is possible to adjust the flow rate characteristics in the fully-opened state of the proportional solenoid valve upon demand. The valve lift can be varied continuously between the closed state and the pre-adjusted maximum lift amount according to the value of electric current supplied.

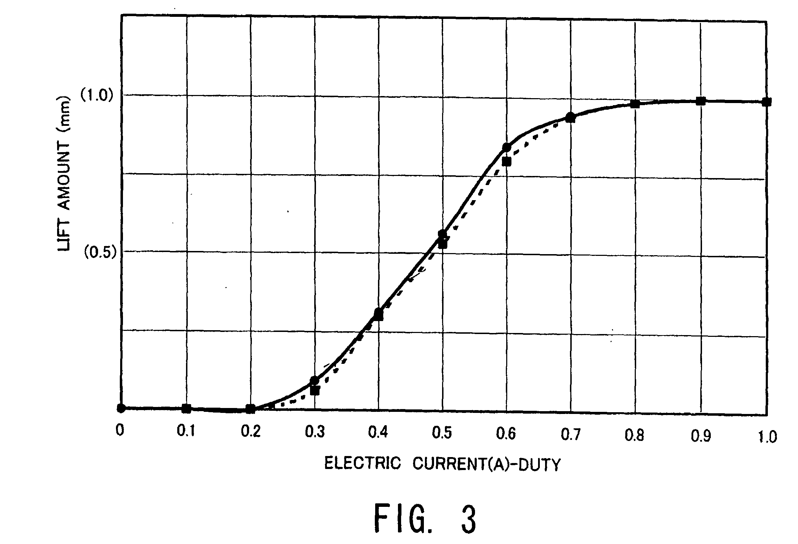

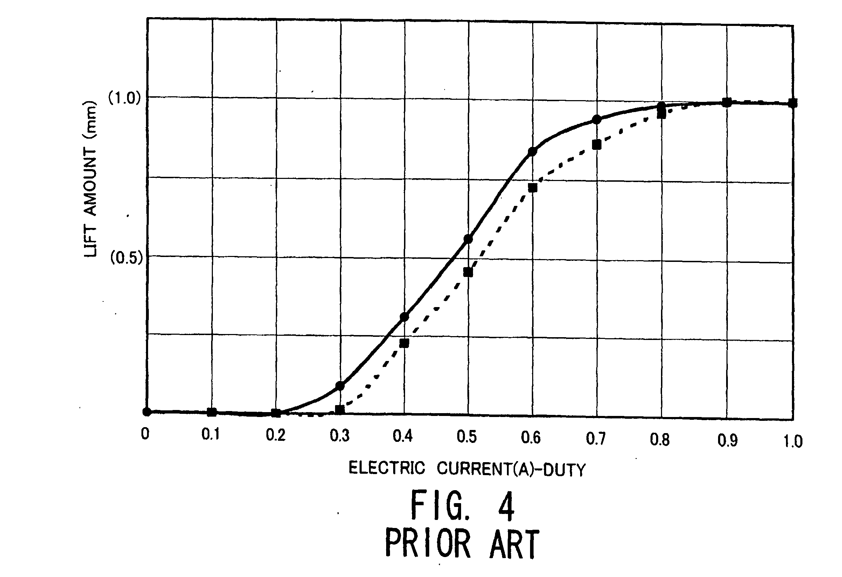

In Figs 3 and 4, the respective abscissa represents the magnitude of electric current supplied to the solenoid coil. The ordinate represents the amount of the valve lift. The variation of the valve lift amount with increasing electric current is indicated by a respective solid line, while the variation of the valve lift amount with decreasing electric current is indicated by a dotted line.

When the proportional solenoid valve is not energized, the end face 8a of the plunger 8 remains completely separated from the washer 9 on the end face 2a of the core 2, (Fig. 1). As the current value is progressively increased, the end face 8a gradually approaches the washer 9. As soon as a predetermined current value is reached, the end face 8a is in contact with the washer 9 (Fig. 2). If the current value then is progressively decreased, the end face 8a gradually moves away from the washer 9. When current has ceased, the end face 8a again is completely separated from the washer 9.

The ratio between the current and the valve lift amount in case of a progressive current increase to the predetermined value, is shown in Fig. 3 by an S-shaped solid line curve. In case of a progressive current decrease from the current predetermined value, the ratio between current and valve lift amount is represented by a dotted line S-shaped curve. Both curves are different, because a hysteresis exists. In Fig. 4, conventional proportional solenoid valves also show current-lift characteristic with hysteresis.

In the proportional solenoid valve of the invention, however, the maximum hysteresis error is markedly reduced in comparison to prior art, because the pressures acting on both axial plunger ends are equal. The movement of the plunger 8 is not adversely affected by fluid pressure influences. Moreover, the sliding contact area between the hollow cylindrical valve element 6 and the shaft 3 is small such that influences of friction as well are greatly reduced.

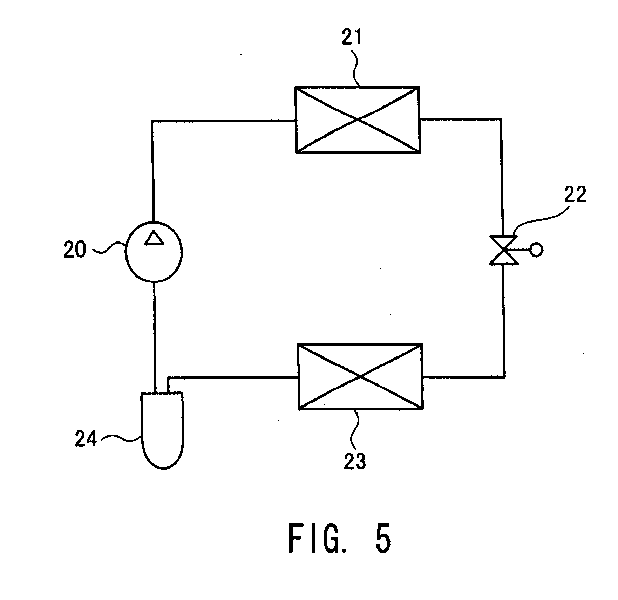

The proportional solenoid valve can be utilized e.g. as an electrically controlled expansion valve for adiabatically expanding refrigerant within a refrigeration cycle used in an air conditioning system (Fig. 5) for cooling an automotive vehicle. Gaseous refrigerant compressed by a compressor 20 is condensed by heat exchange with outside air in a condenser 21. The resulting liquid refrigerant passes the proportional solenoid valve 22 functioning as an expansion valve, and is adiabatically expanded into low-temperature and low-pressure refrigerant, supplied to an evaporator 23 to exchange heat with air within a vehicle compartment, whereby the air is cooled. The refrigerant evaporated in the evaporator 23 is delivered to an accumulator 24 to be separated into gas and liquid. The gaseous refrigerant then returns to the compressor 20.

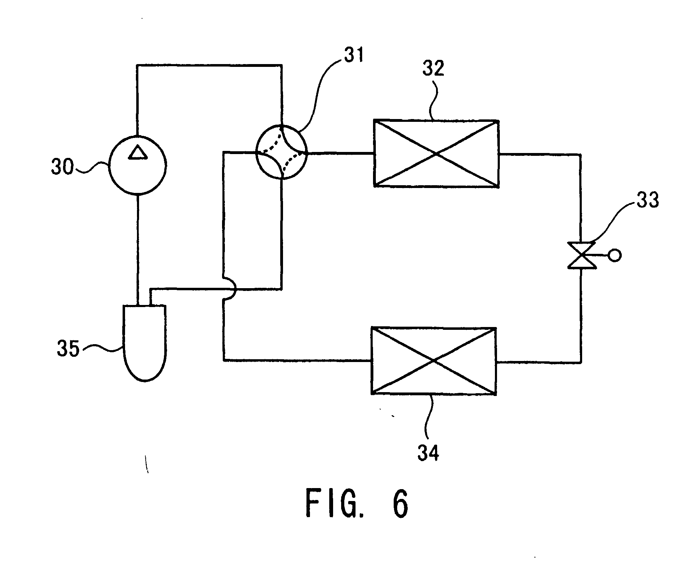

The proportional solenoid valve as well can be used in a refrigeration cycle (Fig. 6) for selectively cooling or heating (heating based on the heat pump principle). The valve characteristic is of advantage for bidirectional flows of refrigerant.

For cooling, gaseous refrigerant compressed by a compressor 30 is guided to an outdoor heat exchanger 32 operating as a condenser, via a solid line path in a four-way valve 31 and is condensed by the outdoor heat exchanger 32. The resulting liquid refrigerant is delivered to the proportional solenoid valve 33 which functions as the expansion valve to adiabatically expand the refrigerant. The expanded refrigerant is supplied to an indoor heat exchanger 34 operating as an evaporator, to exchange heat with air in a vehicle compartment. The refrigerant then flows via another solid line path in the four-way valve 31 into an accumulator 35, where it is separated into gas and liquid. The gaseous refrigerant returns to the compressor 30.

For heating, high-temperature and high-pressure gaseous refrigerant compressed by the compressor 30 is guided via the four-way valve 31 now switched to open a dotted line path to the indoor heat exchanger 34 to exchange heat with air in the vehicle compartment and to heat the air. The liquid refrigerant formed by condensation in the indoor heat exchanger 34 then is adiabatically expanded by the proportional solenoid valve 33 and is delivered for evaporation to the outdoor heat exchanger 32, before it is delivered to the accumulator 35 via another dotted line path in the four-way valve 31.

As described above, from whichever of the open both ends of the pipe 1 a fluid may enter the valves, the proportional solenoid valve of the invention controls the flow rate the same way. Therefore, it is possible to use the proportional solenoid valve either in the unidirectional refrigeration cycle designed for cooling alone, or in the refrigeration cycle for both cooling and heating operations, in which the refrigerant flow direction has to be reversed.

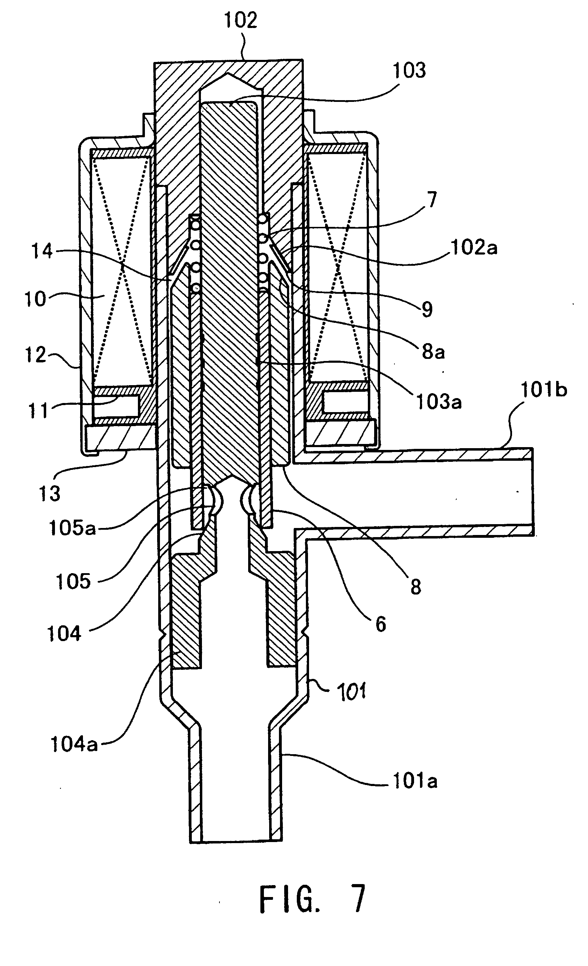

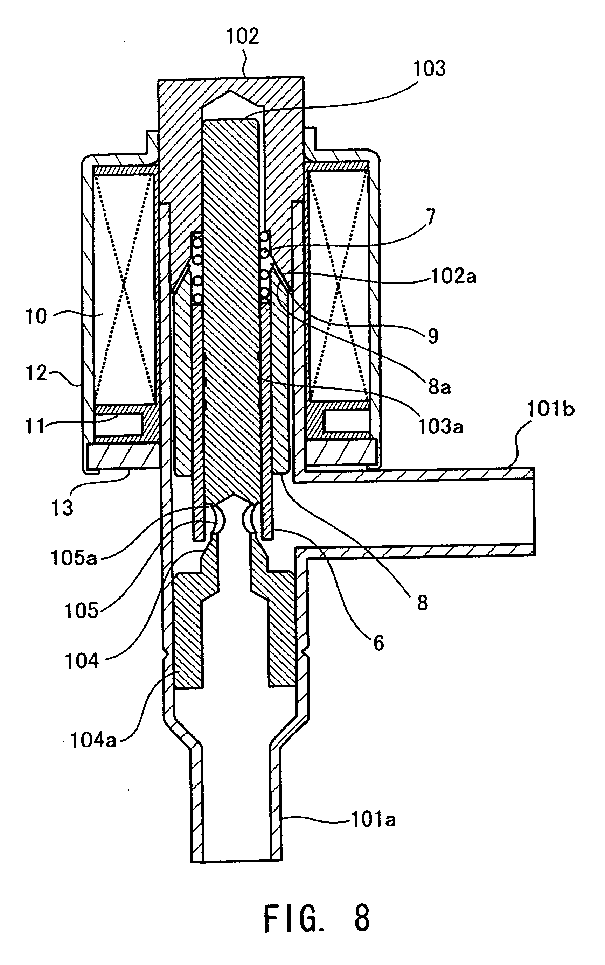

The proportional solenoid valve of Figs 7, 8 has a T-shaped pipe 101 body formed by a hollow cylindrical first pipe 101a with both ends open, and a second pipe 101b joined e.g. perpendicularly to the first pipe 101a. A core 102 is fixedly fitted in the first pipe 101a at a first axial position, e.g. defined by the pipe end in a manner closing this end of the first pipe 101a.

Within the core 102, there is arranged a shaft 103 which extends axially in the first pipe 101a, with one end thereof fitted in the core 102. The shaft 103 is axially fixed in the pipe 101a and/or in the core 102 at a second axial position. The shaft 103 has peripheral circumferential sealing grooves 103a.

A tapered valve seat 104 and a fixed portion 104a are integrally provided at the other shaft end. At a location between a small diameter shaft portion and the valve seat 104 lateral valve holes 105 drilled communicating with an axial fluid passage in a big diameter shaft portion 104. A circumferential communication groove 105a is formed in the shaft 103 at the location of the valve holes 105. The shaft portion 104a is a large diameter hollow cylinder, e.g. is fixed in the first pipe 101a with the shaft portion 104a in intimate contact with the inner wall surface of the first pipe 101a. The axial fixation of the shaft 103 in the pipe results from a press-fit, preferably assisted by crimping the pipe wall into a circumferential groove of the shaft 103. The second axial position may be selected in relation to the first axial position of the core 102 to adjust the value lift amount, prior to fixing the shaft 103 in the pipe 101.

The hollow cylindrical valve element 6 of non-magnetic material is axially movable arranged between the core 102 and the valve seat 104, using the shaft 103 as a guide. Spring 7 is arranged between the hollow cylindrical valve element 6 and the core 102. The spring 7 urges the valve element 6 towards a tapered valve seat 104. The hollow cylindrical plunger 8 is fixedly fitted on the outside of the valve element 6, such that a predetermined gap remains between the inner wall of the first pipe 101a and the plunger 8. Tapered end faces 8a, 102a of the plunger 8 and of the core 102 face each other and have identical slope gradients. The end face 102a of the core 102 carries the conical washer 9 of non-magnetic material. One open end of the first pipe 101a is drawn inwardly to fit, e.g. for welding, to the diameter of a mating pipe.

Without current the valve element 6 and the plunger 8 are moved downward in Fig. 7 by the spring 7, and the valve element 6 is seated on the valve seat 104. The valve holes 105 and the communication groove 105a are closed by the inner wall of the valve element 6. The fluid passage is blocked. Fluid entering via the lower open end of the first pipe 101a reaches the valve holes 105, but is prevented from reaching the open end of the second pipe 101b. Fluid entering via the open end of the second pipe 101b is introduced via a gap between the first pipe 101a and the plunger 8 into a space 14 between the end faces 8a, 102a. Then equal fluid pressures act on both axial ends of the plunger 8 and the valve element 6. This prevents that valve opening/closing operations will be adversely affected by fluid pressures. The valve is maintained closed by the urging force of the spring 7 only.

With maximum current (Fig. 8) supplied to the solenoid coil 10, the plunger 8 is attracted counter to the force of the spring 7 toward the core 102. The end face 8a contacts the washer 9. The valve element 6 moves together with the plunger 8. The valve holes 105 and the communication groove 105a will be fully opened. The open ends of the pipes 101a, 101b communicate with each other via the valve holes 105 and the communication groove 105a. Consequently, bidirectional fluid flows are allowed. When the current value is changed, the plunger 8 and the hollow cylindrical valve element 6 are controlled into a valve lifting position dependent on the selected current value.

Prior to joining the open ends of the pipes 101a, 101b to mating pipes, e.g. by welding, the bobbin 11 carrying the solenoid coil 10, and the first and second yokes 12 and 13, may be removed or moved away from the welding location, to avoid negative effects for those components from the heat generated by the welding process. The solenoid coil 10 and other components also do not interfere with pipe welding work. This improves workability in mounting the proportional solenoid valve and avoids adverse affects, such as distortion, caused by welding heat.

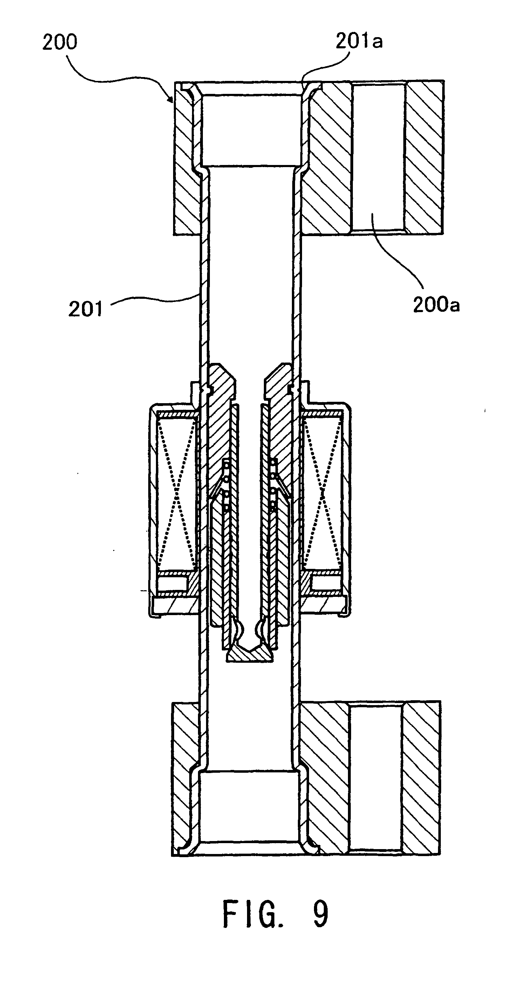

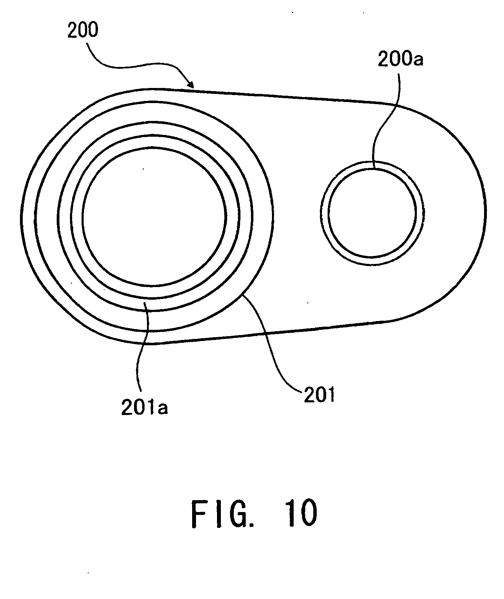

In Figs. 9, 10 a piping joint 200 (a connector piece) adapted to receive a mating pipe is mounted on each open end of the pipe 201 of the proportional solenoid valve designed as in Fig. 1.

The piping joint 200 formed with a generally oval shape is fitted on the open end of the pipe 201. The pipe 201 has an end 201 a the diameter of which is expanded after the piping joint 200 is threaded on the pipe 201. The piping joint 200 has a through hole 200a for a fixing bolt.

For connecting the proportional solenoid valve with the piping joint 200 to a mating pipe, an identical piping joint is fitted on the mating pipe. Both piping joints are brought to each other with an O-ring in-between. They are fixed to each other by a bolt extending through both through holes and a fastening nut.

The pipe connection with O-rings enhances durability against vibration, compared with a pipe connection by welding. Particularly, the proportional solenoid valve can be used at locations where violent vibration occur, such as in an automotive vehicle.

Instead, a single piping joint may be fitted only on either of the open pipe ends. One or two piping joints as well can be fitted on the open ends of the T-shaped pipe body of Fig. 7.

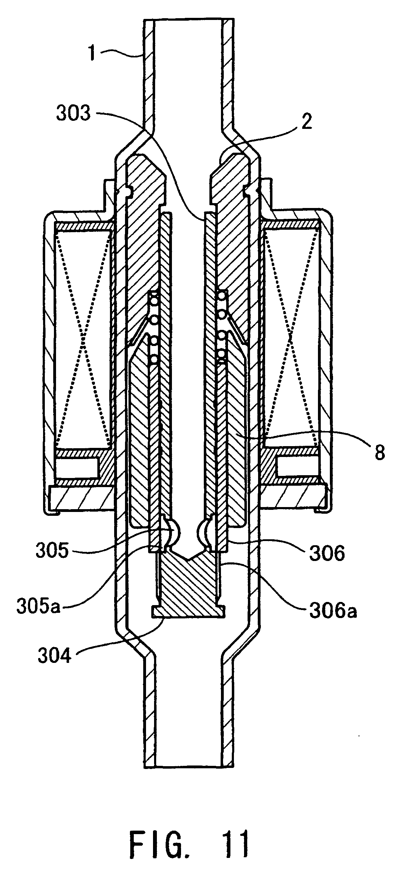

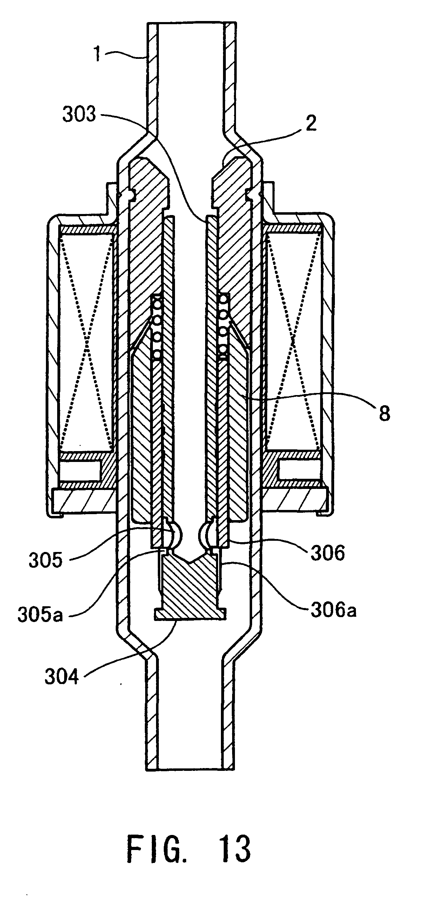

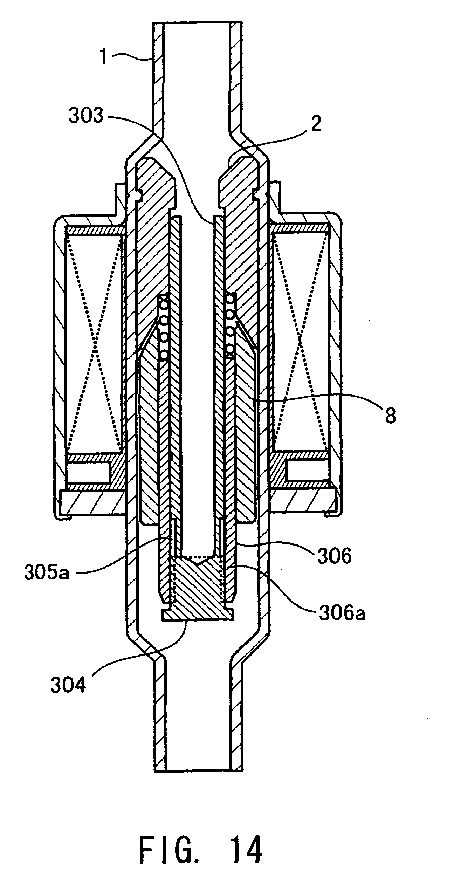

The proportional solenoid valve of Figs 11-18 has a hollow shaft 303 in a fluid passage extending through the core 2 fixed in a pipe 1. One shaft end is fitted in the fluid passage in the core 2. The other shaft end is integrally formed with a solid stopper 304 having a flange projecting radially outwardly from the whole periphery of the shaft. The shaft 303 has e.g. two valve holes 305 laterally drilled adjacent to the stopper 304, and a peripheral circumferential communication groove 305a at the location of the valve holes 305.

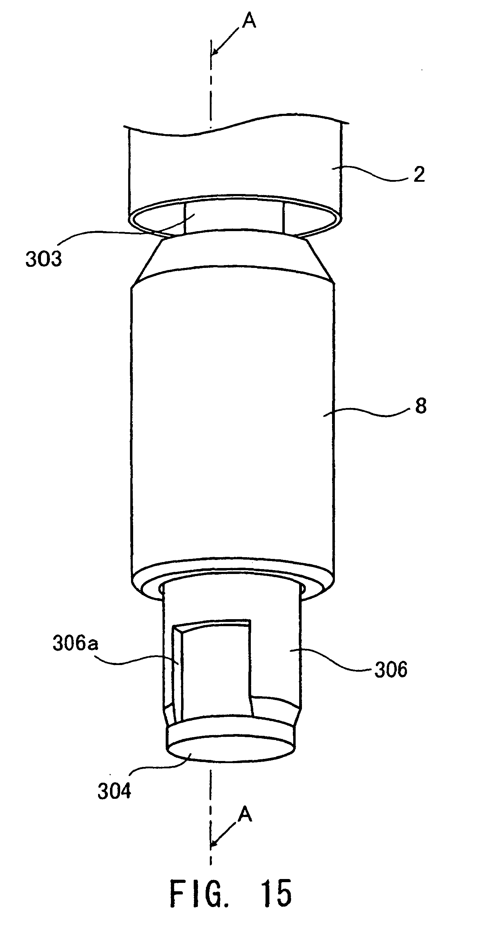

A hollow cylindrical valve element 306 of non-magnetic material is axially moveably arranged on the shaft 303. A hollow cylindrical plunger 8 is fixedly fitted on the valve element 306. One end of the valve element 306 has e.g. two window-like cutout portions 306a (Fig. 15). Without current this one extreme end of the valve element 306 is in contact with the flange of the stopper 304 and fully closes the valve holes 305 and the communication groove 305a. With current supplied the cutout portions 306a communicate with the communication groove 305a and control the flow. In short, the cutout portions 306a of the hollow cylindrical valve element 306 and the communication groove 305a of the shaft 303 form a flow rate or flow amount regulating mechanism similar to a spool valve.

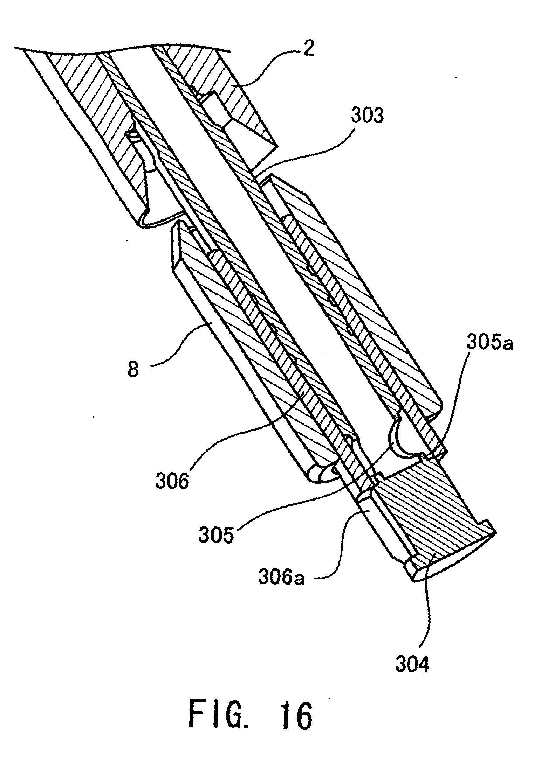

Without current (Figs 15 and 16) the extreme end of the valve element 306 is in contact with the flange of the stopper 304. Each cutout portion 306a is positioned above a portion of the periphery into which the communication groove 305a does not extend. The valve holes 305 and the communication groove 305a are covered and fully closed by the inner wall of the valve element 306.

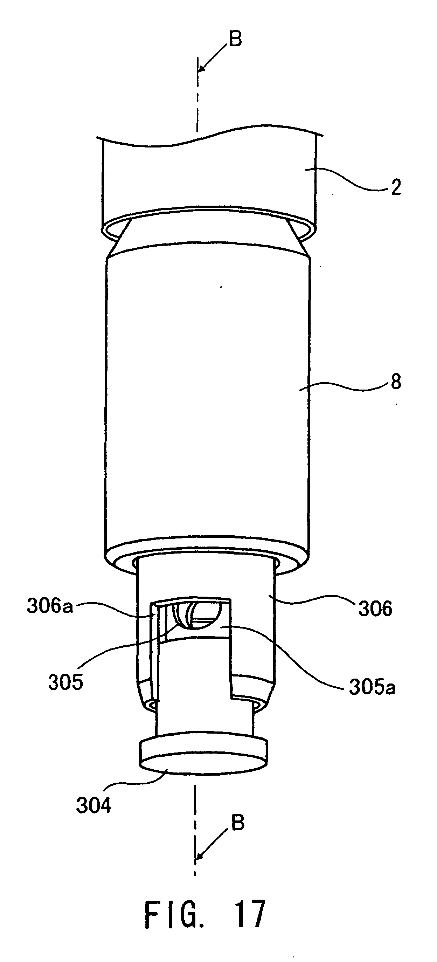

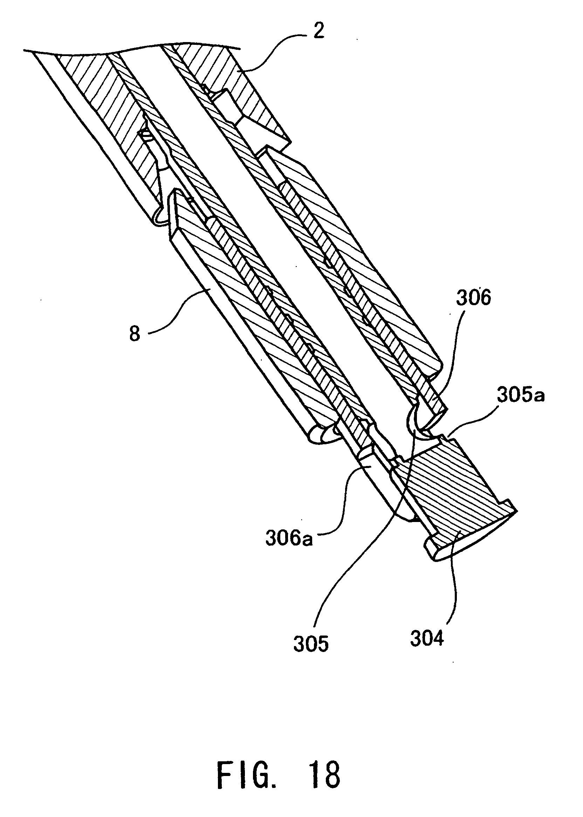

With current supplied, the valve element 306 and the plunger 8 move to the core 2 (Figs 17 and 18). Now, whereby each of cutout portion 306a partially form an overlap with the communication groove 305a. Both ends of the pipe 1 communicate with each other via the cutout portion 306a, the communication groove 305a and the valve holes 305.

This embodiment is particularly useful for controlling the flow rate of a high-pressure working fluid. The proportional solenoid valve is applicable as an expansion valve to a refrigeration system containing high pressure carbon dioxide as the refrigerant. The proportional solenoid valves of Figs 1-4, 7-11 are useful for refrigeration systems containing a low pressure alternative fluorocarbon (HFC-134a) as the refrigerant.

In case of high fluid pressure, e.g. high refrigerant pressure, the pressure drop between the communication groove and across the gap between the end face of the valve element and the tapered valve seat and the region at the other side of the gap is increased to increase the velocity of the refrigerant flow. This could generate a negative pressure around a flow of the refrigerant having passed through the space. The negative pressure would act on the end face of the hollow cylindrical valve element which could be drawn toward the tapered valve seat. Particularly, in case of a small valve lift amount (valve opened a little), the velocity of the refrigerant flow would be high, and hence the force attracting the valve element would become large, and could cause difficulties to properly control the valve lift. However, when refrigerant flows in the other "safe" direction through the gap toward the communication groove and the valve holes, no such attractive force is generated. This means that each of the proportional solenoid valves of Figs 1-4, 7-11 can be applied without problems to a refrigerating system which operates with unidirectional flow of refrigerant only namely in the "safe" direction, even if the cooling system contains a high pressure refrigerant.

The hollow cylindrical valve element 306 formed with cutout portions 306a could also be used in the T-shaped pipe 101.

The hollow cylindrical valve element does not need to be of non-magnetic material. For example, in a case where strainers are arranged at both ends of the proportional solenoid valve or within a system containing the proportional solenoid valve, such that dirt can be removed from magnetic elements, or can be hindered from reaching them, the hollow cylindrical valve element can as well be made from a magnetic material. A valve element of a magnetic material then can be integrally formed with the plunger.

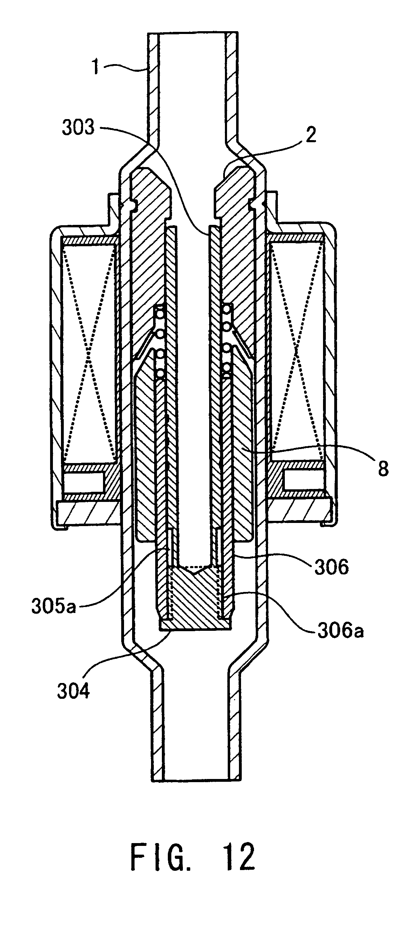

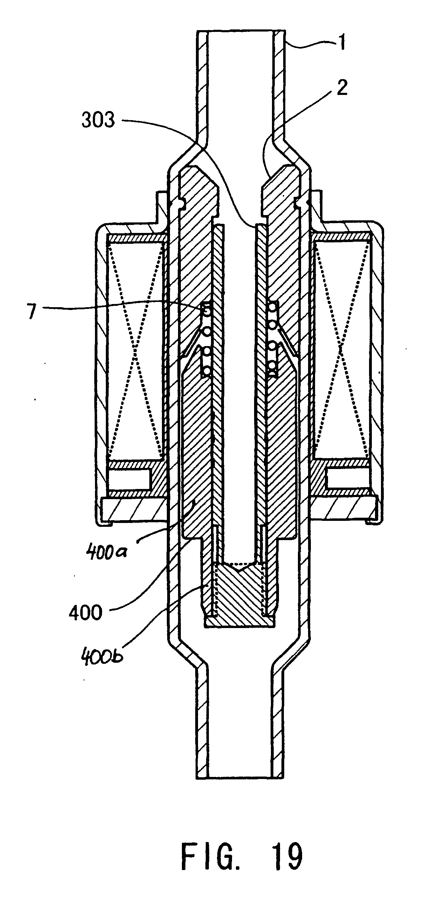

Fig. 19 shows a case in which e.g. the hollow cylindrical valve element 306 of the proportional solenoid valve of Fig. 12 is integrally formed with the plunger 8, both forming a unitary valve element/plunger unit 400. The unit 400 (plunger 400a, element 400b) shown in Fig. 19 is guided axially by shaft 303. Between the plunger 400a and the inner wall of the pipe 1 a predetermined radial gap is maintained. Without current, the unit 400 is moved downward by the spring 7. With current supplied, the unit 400 is attracted toward the core 2 counter to the force of the spring 7. When the current value is changed, the unit 400 will stop at an axial position depending on the current value when the attractive force of the core 2 and the force of the spring 7 are balanced. The construction for the unit 400 can also be applied to the proportional solenoid valves of Figs 1-4, 7-18.

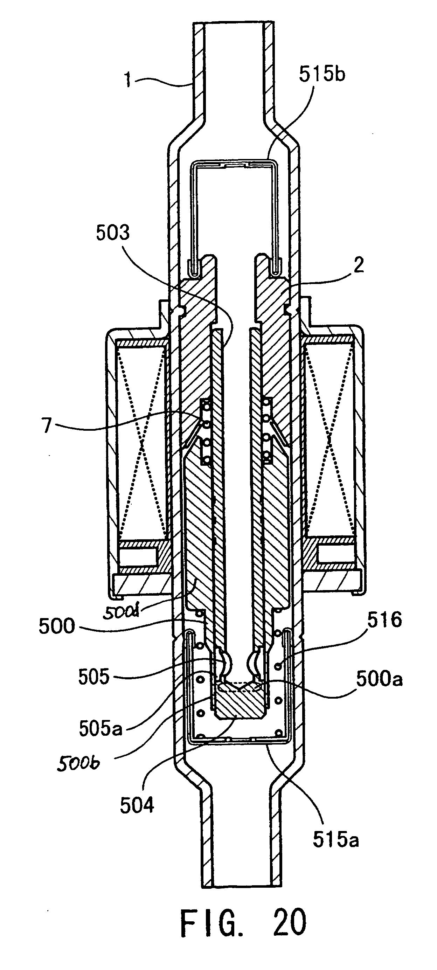

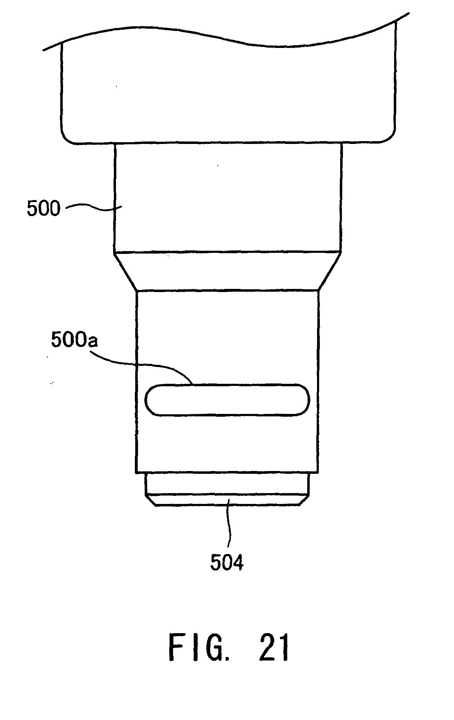

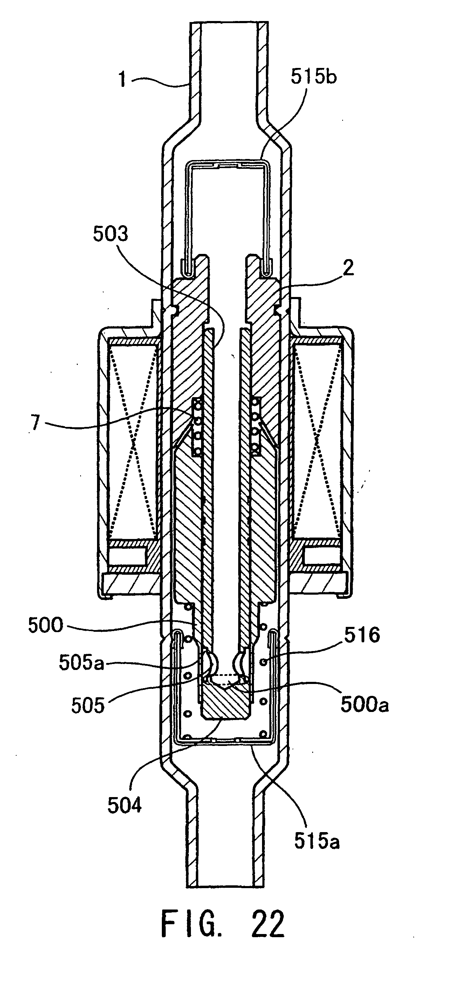

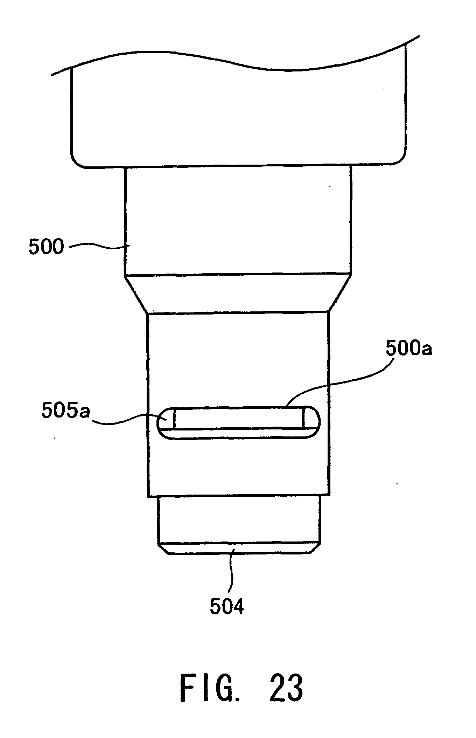

The proportional solenoid valve of Figs 20-23 has a hollow cylindrical valve element 500b and a plunger 500d which are integrated into a hollow cylindrical one-piece unit 500, axially movably guided by a shaft 503. The shaft 503 defines an axial fluid passage. One shaft end is fitted into the fluid passage of the core 2. A closing portion 504 closing the axially extending fluid passage is integrally formed with the other end of the shaft 503. Valve holes 505 are drilled adjacent to the closing portion 504. At the location of the valve holes 505 a circumferential communication groove 505a is formed in the shaft 503. An e.g. pot-shaped strainer 515a fitted in the inner wall of the pipe 1 opposed to the closing portion 504. A further strainer 515b is fitted on the core 2.
Both strainers prevent dirt from entering the central portion of the valve. A second spring 516 urges the unit 500 toward the core 2. The second spring 516 utilizes the strainer 515a as a spring seat. The spring prevents that the unit 500 from sliding off the shaft 503. The hollow cylindrical unit 500 has its end operating as the valve element 500b with a reduced thickness wall or tube thickness. In this end of the hollow cylindrical unit 500 at least one circumferentially extending elongated slot 500a is formed.

Without current, both springs 7, 516 are balanced. The slot 500a then is positioned on the outer peripheral surface of the closing portion 504. The valve holes 505 and the communication groove 505a are covered and fully closed by the inner wall of the hollow cylindrical unit 500.

With current supplied, the hollow cylindrical unit 500 is moved toward the core 2. The slot 500a now partially is overlapped with the communication groove 505a. Both ends of the pipe 1 communicate via the slot 500a, the communication groove 505a, and the valve holes 505 with each other.

In case of a high pressure fluid, negative pressure is generated around a flow of the fluid having passed through the slot 500a via the communication groove 505a. An attractive force is generated which tends to attract the unit 500 toward the end of the closing portion 504. This attractive force is the stronger the larger the area of the inner surface of the slot 500a is, which surface area is pressure-active in the axial direction. Since, however, the end of the hollow cylindrical unit 500 is formed with thin radial thickness the mentioned area of the inner surface of the slot 500a is very small as well. This significantly suppresses the influence of the attractive axial force.

Furthermore, here the respective spring constants of the springs 7, 516 may be increased to make the unit 500 less movable, effectively act against the influence of the attractive force which tends to attract the unit 500 toward the end of the closing portion 504. Thus, by setting the respective spring constants of the first and second springs 7 and 516 properly in relation to the size of the hollow cylindrical unit 500, it is possible to prevent that the communication groove 505a and the valve holes 505 will be closed by the attraction of the unit 500 toward the end of the closing portion 504.

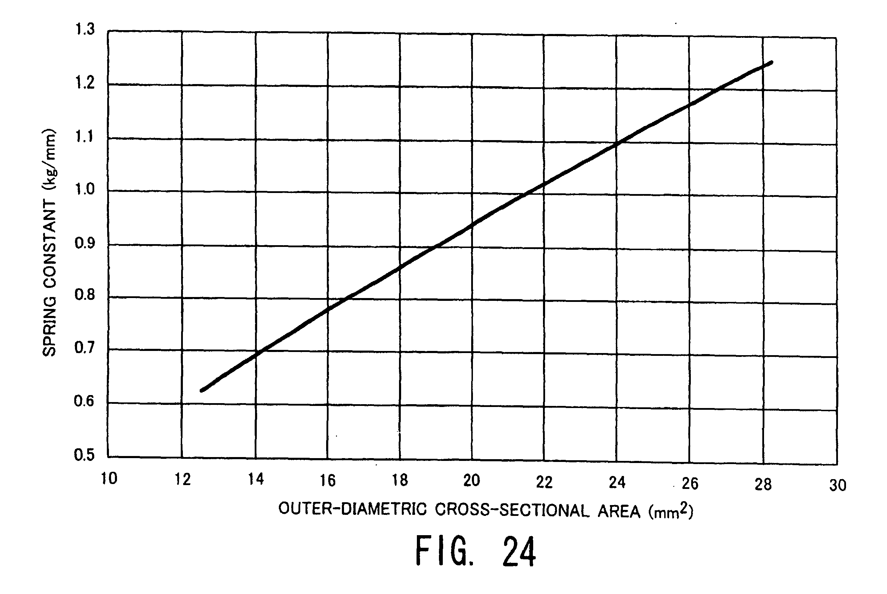

The graph of Fig. 24 represents the relationship between the outer-diametric cross-sectional area (in other words, the area of the circle which makes an outer diameter a diameter) of the end (the valve element 500b) of the unit 500 and the spring constant. The abscissa represents values of the outer-diametric cross-sectional area of the end of the unit 500 which is proportional to the end area of the unit 500. The ordinate represents values of the sum of the spring constants of the springs 7, 516. A plotted line represents a plurality of points which are substantially free of the influence of the attractive force of the fluid. This line indicates that the ratio between the spring constant and the outer-diametric cross-sectional area of the hollow cylindrical unit 500 should be about 0.05. More specifically, when the ratio of the spring constant of the springs 7, 516 to the outer-diametric cross-sectional area of the hollow cylindrical unit 500 becomes equal to or larger than 0.05, the unit 500 is made less movable by an increase of the spring constant, so that the attractive force of fluid which passes through the slot 500a via the communication groove 505a can be practically ignored. On the other hand, when the ratio of the spring constant to the outer-diametric cross-sectional area is smaller than 0.05, the unit 500 is more easily movable, and hence is affected by the attractive force of the fluid. Therefore, by setting the ratio between the spring constant of the springs 7, 516 and the outer-diametric cross-sectional area of the unit 500 to 0.05 or more, it is possible to positively prevent the hollow cylindrical valve element and plunger 500 from being moved by the attractive force of the fluid.

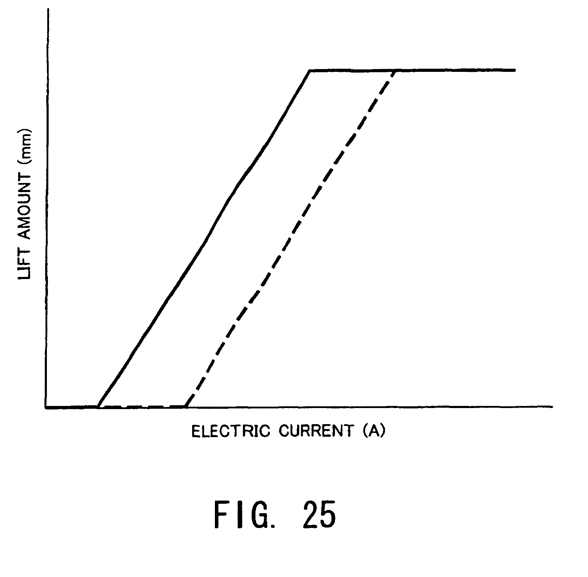

In Fig. 25 the abscissa represents electric current values supplied to the solenoid coil 10. The ordinate represents valve lift amounts of the unit 500 toward the core 2. Changes of the lift amounts occurring with increasing electric current are schematically represented by a solid line. For comparison, the current-lift characteristic of a proportional solenoid valve having a single spring is schematically shown by a dotted line.

The proportional solenoid valve of Figs 20-23 has the two springs 7, 516. Without current, the communication groove 505a and the valve holes 505 are closed by the valve element 500b of the hollow cylindrical unit 500, while both springs 7, 516 are balanced (closed state).

Upon energization in this closed state, the unit 500 immediately moves toward the core 2. Actually, however, since there occurs friction between the unit 500 and the shaft 503, unit 500 starts moving toward the core 2 only after the electric current supplied to the coil 10 exceeds a predetermined threshold value. Compared with the other valve types each containing the single spring 7 only, there the valve element and plunger require an attracting magnetic force which overcomes both the friction and the force of the spring 7 to start moving. This means that the proportional solenoid valve of Figs 20-23 is capable of starting the movement of the hollow cylindrical unit 500 with a comparative lower value of the supplied electric current, because one spring is acting in the direction of the attraction force.

The piping joints 200 of Fig. 9can also be used for the other embodiments.

Since the component parts for opening and closing the valve are arranged within the pipe, it is possible to reduce the number of component parts and the size of the proportional solenoid valve, which contributes to reduction of manufacturing costs including machining costs and material costs. As the operation of the hollow cylindrical valve element is not adversely affected by axial fluid pressure influences, the proportional solenoid valve is capable of controlling a flow rate of bidirectional fluid flows. This allows to widely use the proportional solenoid valve in various systems. When the hollow cylindrical valve element is of non-magnetic material, it is easily possible to prevent dirt of magnetic materials to deposit on the valve element. This improves the sealability and durability of the proportional solenoid valve.

In case that springs are used which load the hollow cylindrical valve element in both axial directions, the valve opening operation can be initiated with small electric current and while simultaneously the communication between the opposite ends of the pipe is maintained reliably.

## Claims

1. A proportional solenoid valve for changing a valve lift continuously according to a value of an electric current supplied to a solenoid coil, comprising
a core (2, 102) fixed at a first axial position in a hollow cylindrical pipe (1, 201, 101);
a partially hollow shaft (3, 103, 303, 503) having one end thereof fixed either in the core or in the pipe at a second axial position of the pipe and another end thereof provided with a plurality of valve holes (5, 305, 505, 105) opening to a circumference of the shaft such that the valve holes communicate with a fluid passage extending axially of the pipe;
a hollow cylindrical valve element (6, 306, 400b, 500b) arranged axially movable using the shaft as an axial guide so as to open and close the valve holes;
at least a first spring (7) arranged between the core (2, 102) and the hollow cylindrical valve element (6, 306, 400b, 500b), for urging the hollow cylindrical valve element in an axial direction away from the core (2, 102); and a solenoid coil (10) circumferentially provided on an outside of the pipe for displacing the valve element in axial direction toward the core,
**characterized by** that if further comprises a hollow cylindrical plunger (8, 400a, 500d) fixedly provided on the hollow cylindrical valve element, for displacing said valve element.

2. The proportional solenoid valve according to claim 1, **characterized in that** the pipe (1, 201) is a straight pipe, and that the fluid passage within the shaft, which communicates with the valve holes, extends to a core-side extreme end of the shaft and further communicates with a passage formed through the core axially thereof.

3. The proportional solenoid valve according to claim 1, **characterized in that** the pipe (101) is a T-shaped body formed by joining a second pipe (101b) e.g. perpendicularly to a straight first pipe (101a), the first pipe (101a) having one end thereof closed by the core (102), and the fluid passage within the shaft (103), which communicates with the valve holes (105), extending to an extreme end of the another end (104) of the shaft, an outer peripheral surface of the shaft close to the extreme end of the another end being in intimate contact with an inner wall surface of the first pipe (101a).

4. The proportional solenoid valve according to claim 3, **characterized in that** at least the solenoid coil (10) is removably provided on the first pipe (101a) and the core (102).

5. The proportional solenoid valve according to claim 1, **characterized in that** the shaft (3, 103, 303, 503) has a circumferential communication groove (5a, 105a, 305a, 505a) in an outer peripheral surface of a shaft portion formed with the valve holes (5, 105, 305, 505).

6. The proportional solenoid valve according to claim 1, **characterized in that** a portion of the shaft (3, 103) with which the hollow cylindrical valve element (6) is brought into abutment by the force of the first spring (7) is of conically formed shape to provide a tapered valve seat (4,104).

7. The proportional solenoid valve according to claim 1, **characterized in that** a portion of the shaft (303) with which the hollow cylindrical valve element (306, 400b) is brought into abutment by the force of the first spring (7) is formed as a flange (304) projecting radially outward.

8. The proportional solenoid valve according to claim 7, **characterized in that** the hollow cylindrical valve element (306) has a plurality of cutout portions (306a) formed in a flange-side end thereof, the cutout portions (306a) fully closing the valve holes (305) when the hollow cylindrical valve element (306) is in contact with the flange (304), and open communication with the valve holes (305) when the hollow cylindrical valve element (306) is moved toward the core (2) by energization of the solenoid coil (10).

9. The proportional solenoid valve according to claim 1, **characterized by** a second spring (516) for urging the hollow cylindrical valve element (500) and the plunger counter to the first spring (7) toward the core (2).

10. The proportional solenoid valve according to claim 9, **characterized in that** the hollow cylindrical valve element (500b) is formed with a circumferentially elongated slot (500a) to fully close the valve holes (505) by the valve element (500b) when the first spring (7) and the second spring (516) are balanced with each other, and that the slot (500a)communicates with the valve holes when the hollow cylindrical valve element is moved toward the core (2) by energization of the solenoid coil (10).

11. The proportional solenoid valve according to claim 9, **characterized in that** the hollow cylindrical valve element (500b) has an end portion thereof formed to have a reduced radial thickness, the end portion including a portion formed with the slot (500a).

12. The proportional solenoid valve according to claim 11, **characterized in that** a ratio between a sum of the spring constants of the first and second springs (7, 516) and an outer-diametric cross-sectional area of a valve seat-side end portion of the hollow cylindrical valve element (500b) is equal to or larger than 0.05.

13. The proportional solenoid valve according to claim 1, **characterized in that** the plunger (8) has an outer diameter which produces a predetermined gap between an inner wall of the pipe (1) and the plunger (8).

14. The proportional solenoid valve according to claim 1, **characterized in that** the core (2, 102) and the plunger (8) have respective end faces (2a, 8a, 102a) opposed to each other, the end faces being tapered conical surfaces sloped with identical gradients.

15. The proportional solenoid valve according to claim 1, **characterized in that** the hollow cylindrical valve element (6, 306) is made of a non-magnetic material.

16. The proportional solenoid valve according to claim 1, **characterized in that** the shaft (3, 303) has at least one circumferential groove (3a) in a sliding guide surface, on which sliding guide surface the hollow cylindrical valve element (6) slides.

17. The proportional solenoid valve according to claim 1, **characterized in that** the pipe (1) has open ends thereof each drawn in a manner adapted to a diameter of a mating pipe for welding.

18. The proportional solenoid valve according to claim 1, **characterized in that** the hollow cylindrical valve element (400b, 500b) is integrally formed with the plunger (400a, 500d) into a one-piece unit (400, 500).

19. The proportional solenoid valve according to claim 1, **characterized in that** the shaft (3) is fixed to the core (2) by press-fitting, and a flow characteristic of the valve is adjusted by selecting the second axial position prior to establishing the press-fitting.

20. The proportional solenoid valve according to claim 1, **characterized in that** the pipe (201) has piping joints (200) attached to open ends thereof.

21. The proportional solenoid valve according to claim 1, **characterized in that** the core (2) is axially secured in the pipe (1) at a first axial position, preferably by press-fitting, preferably with additional crimping the pipe wall into a positioning circumferential groove of the core (2), that the shaft (3) is axially secured in the core (2) at a second axial position, preferably by a press-fitting, and that the second axial position of the shaft (3) is selectable in relation to the first axial position prior to establishing the press-fitting to selectively adjust the nominal maximum valve element lift amount.

22. The proportional solenoid valve according to claim 1, **characterized in that** the core (102) is axially secured in said pipe (101a) at a first axial position, preferably by press-fitting, preferably at a stop at a pipe end, that the shaft (103) is axially secured in the pipe (101a) at a second axial position, preferably by a press-fitting, preferably with additional crimping the pipe wall, and that the second axial position of the shaft is selectable in relation to the first axial position by said press-fitting in order to selectively adjust the nominal maximal valve element lift amount.

## Patentansprüche

1. Proportionalmagnetventil zum kontinuierlichen Verändern eines Ventilhubs entsprechend einem Wert eines elektrischen Stroms, der einer Magnetspule zugeführt wird, mit
einem an einer ersten axialen Position in einem hohlen zylindrischen Rohr (1, 201, 101) fixierten Kern (2, 102);
einer zum Teil hohlen Welle (3, 103, 303, 503), deren eines Ende entweder in dem Kern oder in dem Rohr an einer zweiten axialen Position des Rohres fixiert ist, und dessen anderes Ende mit einer Vielzahl Ventilöffnungen (5, 105, 305, 505) versehen ist, die in einem Umfang des Rohres derart münden, dass die Ventilöffnungen mit einer Fluidpassage kommunizieren, die sich axial im Rohr erstreckt;
einem hohlen zylindrischen Ventilelement (6, 306, 400b, 500b), das axial beweglich angeordnet ist und die Welle als eine axiale Führung benutzt, um die Ventilöffnungen zu öffnen und zu schließen;
zumindest einer ersten Feder (7), die zwischen dem Kern (2, 102) und dem hohlen zylindrischen Ventilelement (6, 306, 400b, 500b) angeordnet ist zum Beaufschlagen des hohlen zylindrischen Ventilelements in einer axialen Richtung weg von dem Kern (2, 102); und
einer Magnetspule (10), die an einer Außenseite des Rohres in Umfangsrichtung vorgesehen ist zum Versetzen des Ventilelements in axialer Richtung zu dem Kern,
**dadurch gekennzeichnet, dass** es weiterhin einen hohlen zylindrischen Plunger (8, 400a, 500d) aufweist, der fixiert an dem hohlen zylindrischen Ventilelement vorgesehen ist zum Versetzen des Ventilelements.

2. Proportionalmagnetventil nach Anspruch 1, **dadurch gekennzeichnet, dass** das Rohr (1, 201) ein gerades Rohr ist, und dass sich die Fluidpassage innerhalb der Welle, die mit den Ventilöffnungen kommuniziert, zu einem kernseitigen extremen Ende der Welle erstreckt und weiterhin kommuniziert mit einer Passage, die axial durch den Kern geformt ist.

3. Proportionalmagnetventil nach Anspruch 1, **dadurch gekennzeichnet, dass** das Rohr (101) ein T-förmiger Körper ist, der durch Verbinden eines zweiten Rohres (101b), z.B. in vertikaler Richtung, mit einem geraden ersten Rohr (101a) geformt ist, wobei das erste Rohr (101a) ein Ende durch den Kern (102) verschlossen hat, und wobei sich die Fluidpassage innerhalb der Welle (103), die mit den Ventilöffnungen (105) kommuniziert, zu einem extremen Ende des anderen Endes (104) der Welle erstreckt, und dass eine äußere periphere Oberfläche der Welle benachbart zu dem extremen Ende des anderen Endes in innigem Kontakt mit einer Innenwandoberfläche des ersten Rohres (101 a) ist.

4. Proportionalmagnetventil nach Anspruch 1, **dadurch gekennzeichnet, dass** zumindest die Magnetspule (10) auf dem ersten Rohr (101a) und dem Kern (102) abnehmbar angeordnet ist.

5. Proportionalmagnetventil nach Anspruch 1, **dadurch gekennzeichnet, dass** die Welle (3, 103, 303, 503) eine in Umfangsrichtung verlaufende Kommunikationsnut (5, 105, 305, 505) in einer äußeren peripheren Fläche eines Wellenabschnitts aufweist, der mit den Ventilöffnungen (5, 105, 305, 505) geformt ist.

6. Proportionalmagnetventil nach Anspruch 1, **dadurch gekennzeichnet, dass** ein Abschnitt der Welle (3, 103), mit welchem das hohle zylindrische Ventilelement (6) durch die Kraft der ersten Feder (7) in Anlage bringbar ist, von konisch geformter Gestalt ist, um einen sich verjüngenden Ventilsitz (4, 104) vorzusehen.

7. Proportionalmagnetventil nach Anspruch 1, **dadurch gekennzeichnet, dass** ein Abschnitt der Welle (303), mit welchem das hohle zylindrische Ventilelement (306, 400b) durch die Kraft der ersten Feder (7) in Anlage gebracht wird, als ein nach radial außen vorstehender Flansch (304) geformt ist.

8. Proportionalmagnetventil nach Anspruch 7, **dadurch gekennzeichnet, dass** das hohle zylindrische Ventilelement (306) eine Vielzahl Ausschnittsbereiche (306a) aufweist, die in einem flanschseitigen Ende des Ventilelements geformt sind, das die Ausschnittsbereiche (306a) die Ventilöffnungen (305) voll verschließen, sobald das hohle zylindrische Ventilelement (306) in Kontakt ist mit dem Flansch (304), und dass die Ausschnittsbereiche (306a) eine Kommunikation mit den Ventilöffnungen (305) freilegen, sobald das hohle zylindrische Ventilelement (306) durch Strombeaufschlagung der Magnetspule (10) zu dem Kern (2) bewegt wird.

9. Proportionalmagnetventil nach Anspruch 1, **gekennzeichnet durch** eine zweite Feder (516) zum Beaufschlagen des hohlen zylindrischen Ventilelements (500) und des Plungers entgegen der ersten Feder (7) zu dem Kern (2).

10. Proportionalmagnetventil nach Anspruch 9, **dadurch gekennzeichnet, dass** das hohle zylindrische Ventilelement (500b) mit einem in Umfangsrichtung langgestreckten Schlitz (500a) ausgebildet ist zum vollen Verschließen der Ventilöffnungen (505) durch das Ventilelement (500b), wenn die erste Feder (7) und die zweite Feder (516) miteinander im Gleichgewicht sind, und dass der Schlitz (500a) mit den Ventilöffnungen kommuniziert, wenn das hohle zylindrische Ventilelement durch Strombeaufschlagen der Magnetspule (10) zu dem Kern (2) bewegt ist.

11. Proportionalmagnetventil nach Anspruch 9, **dadurch gekennzeichnet, dass** das hohle zylindrische Ventilelement (500b) einen Endbereich aufweist, der eine reduzierte radiale Dicke besitzt und dass der Endbereich einen Abschnitt umfasst, der mit dem Schlitz (500a) geformt ist.

12. Proportionalmagnetventil nach Anspruch 11, **dadurch gekennzeichnet, dass** ein Verhältnis zwischen einer Summe der Federkonstanten der ersten und zweiten Federn (7, 516) und einem Außendurchmesser-Querschnittsbereich eines ventilsitzseitigen Endabschnitts des hohlen zylindrischen Ventilelements (500b) gleich oder größer ist als 0,05.

13. Proportionalmagnetventil nach Anspruch 1, **dadurch gekennzeichnet, dass** der Plunger (8) einen Außendurchmesser aufweist, der zwischen einer inneren Wand des Rohres (1) und dem Plunger (8) einen vorbestimmten Spalt herstellt.

14. Proportionalmagnetventil nach Anspruch 1, **dadurch gekennzeichnet, dass** der Kern (2, 102) und der Plunger (8) jeweilige Endflächen (2a, 8a, 102a) aufweisen, die einander gegenüberliegen, und dass die Endflächen sich verjüngende konische Oberflächen sind, die mit identischen Gradienten geneigt sind.

15. Proportionalmagnetventil nach Anspruch 1, **dadurch gekennzeichnet, dass** das hohle zylindrische Ventilelement (6, 306) aus einem nicht-magnetischen Material hergestellt ist.

16. Proportionalmagnetventil nach Anspruch 1, **dadurch gekennzeichnet, dass** die Welle (3, 303) in einer Gleitführungsoberfläche zumindest eine in Umfangsrichtung verlaufende Nut (3a) aufweist, wobei auf dieser Gleitführungsoberfläche das hohle zylindrische Ventilelement (6) gleitet.

17. Proportionalmagnetventil nach Anspruch 1, **dadurch gekennzeichnet, dass** das Rohr (1) offene Enden aufweist, die so gezogen sind, dass sie angepasst sind an einen Durchmesser eines zugehörigen Rohres zum Verschweißen.

18. Proportionalmagnetventil nach Anspruch 1, **dadurch gekennzeichnet, dass** das hohle zylindrische Ventilelement (400b, 500b) integral geformt ist mit dem Plunger (400a, 500d) in eine einstückige Einheit (400, 500).

19. Proportionalmagnetventil nach Anspruch 1, **dadurch gekennzeichnet, dass** die Welle (3) durch Presspassen an dem Kern (2) fixiert ist, und dass eine Strom-Charakteristik des Ventils eingestellt ist durch Auswählen der zweiten axialen Position vor dem Herstellen der Presseinpassung.

20. Proportionalmagnetventil nach Anspruch 1, **dadurch gekennzeichnet, dass** das Rohr (201) Rohrverbindungen (200) aufweist, die an den offenen Enden des Rohres angebracht sind.

21. Proportionalmagnetventil nach Anspruch 1, **dadurch gekennzeichnet, dass** der Kern (2) an einer ersten axialen Position, vorzugsweise durch Presspassen, vorzugsweise mit zusätzlichem Einschnüren der Rohrwand in eine positionierende Umfangsnut des Kerns (2), in dem Rohr (1) axial festgelegt ist, dass die Welle (3) an einer zweiten axialen Position, vorzugsweise durch eine Presseinpassung, in dem Kern (2) festgelegt ist, und dass die zweite axiale Position der Welle (3) wählbar ist in Relation zu der ersten axialen Position vor dem Herbeiführen der Presseinpassung zum wahlweisen Einstellen des nominellen maximalen Ventilelement-Ventilhubmaßes.

22. Proportionalmagnetventil nach Anspruch 1, **dadurch gekennzeichnet, dass** der Kern (102) an einer ersten axialen Position axial in dem Rohr (101a) festgelegt ist, vorzugsweise durch Presseinpassung, vorzugsweise an einen Anschlag an einem Rohrende, dass die Welle (103) an einer zweiten axialen Position in dem Rohr (101a ) axial festgelegt ist, vorzugsweise durch eine Presseinpassung, vorzugsweise mit einer zusätzlichen Einschnürung der Rohrwand, und dass die zweite Axialposition der Welle wählbar ist in Relation zu der ersten Axialposition durch die Presseinpassung, um das nominale maximale Ventilelement-Ventilhubmaß wahlweise einzustellen.

## Revendications

1. Soupape magnétique proportionnelle destinée au changement d'une levée de soupape d'une manière continue selon une valeur d'un courant électrique fourni à une bobine solénoïde, comprenant :
un noyau (2, 102) fixé à une première position axiale dans un tuyau cylindrique creux (1, 201, 101) ;
un arbre partiellement creux (3, 103, 303, 503) présentant une extrémité fixée dans le noyau ou dans le tuyau à une seconde position axiale du tuyau et une autre extrémité équipée d'une pluralité de trous de soupape (5, 305, 505, 105) s'ouvrant sur une circonférence de l'arbre, de telle sorte que les trous de soupape communiquent avec un passage de fluide s'étendant de manière axiale par rapport au tuyau ;
un élément de soupape cylindrique creux (6, 306, 400b, 500b) disposé de manière à pouvoir être mobile de manière axiale à l'aide de l'arbre comme un guide axial, de manière à ouvrir et à fermer les trous de soupape ;
au moins un premier ressort (7) disposé entre le noyau (2, 102) et l'élément de soupape cylindrique creux (6, 306, 400b, 500b), afin de pousser l'élément de soupape cylindrique creux dans une direction axiale loin du noyau (2, 102) ; et une bobine solénoïde (10) fournie de manière circon férentielle sur une partie extérieure du tuyau afin de déplacer l'élément de soupape dans une direction axiale vers le noyau,
**caractérisée en ce qu'** elle comprend, en outre, un piston cylindrique creux (8, 400a, 500d) fourni de manière fixe sur l'élément de soupape cylindrique creux, en vue du déplacement dudit élément de soupape.

2. Soupape magnétique proportionnelle selon la revendication 1, **caractérisée en ce que** le tuyau (1, 201) est un tuyau droit, et **en ce que** le passage de fluide à l'intérieur de l'arbre, qui communique avec les trous de soupape, s'étend vers une extrémité extrême de l'arbre côté noyau et communique, en outre, avec un passage formé dans le noyau de manière axiale par rapport audit noyau.

3. Soupape magnétique proportionnelle selon la revendication 1, **caractérisée en ce que** le tuyau (101) est un corps en forme de T formé en ajoutant un second tuyau (101b), par exemple, de manière perpendiculaire à un premier tuyau droit (101a), le premier tuyau (101a) présentant une extrémité fermée par le noyau (102), et le passage de fluide à l'intérieur de l'arbre (103), qui communique avec les trous de soupape (105), s'étendant vers une extrémité extrême de l'autre extrémité (104) de l'arbre, une surface périphérique extérieure de l'arbre proche de l'extrémité extrême d'une autre extrémité étant en contact étroit avec une surface de paroi intérieure du premier tuyau (101a).

4. Soupape magnétique proportionnelle selon la revendication 3, **caractérisée en ce que** au moins la bobine solénoïde (10) est fournie de manière amovible sur le premier tuyau (101a) et le noyau (102).

5. Soupape magnétique proportionnelle selon la revendication 1, **caractérisée en ce que** l'arbre (3, 103, 303, 503) présente une rainure de communication circonférentielle (5a, 105a, 305a, 505a) dans une surface périphérique extérieure d'une partie de l'arbre formée avec les trous de soupape (5, 105, 305, 505).

6. Soupape magnétique proportionnelle selon la revendication 1, **caractérisée en ce qu'**une partie de l'arbre (3, 103) avec laquelle l'élément de soupape cylindrique creux (6) est mis en butée par la force du premier ressort (7) est d'une forme formée coniquement pour fournir un logement de soupape conique (4, 104).

7. Soupape magnétique proportionnelle selon la revendication 1, **caractérisée en ce qu'**une partie de l'arbre (303) avec laquelle l'élément de soupape cylindrique creux (306, 400b) est mis en butée par la force du premier ressort (7) est formé comme une bride (304) saillant de manière radiale vers l'extérieur.

8. Soupape magnétique proportionnelle selon la revendication 7, **caractérisée en ce que** l'élément de soupape cylindrique creux (306) présente une pluralité de parties coupées (306a) formées dans une extrémité dudit élément côté bride, les parties coupées (306a) fermant entièrement les trous de soupape (305) lorsque l'élément de soupape cylindrique creux (306) est en contact avec la bride (304), et ouvrent la communication avec les trous de soupape (305) lorsque l'élément de soupape cylindrique creux (306) est déplacé en direction du noyau (2) par alimentation de la bobine solénoïde (10).

9. Soupape magnétique proportionnelle selon la revendication 1, **caractérisée par** un second ressort (516) permettant de pousser l'élément de soupape cylindrique creux (500) et le piston vers le premier ressort (7) en direction du noyau (2).

10. Soupape magnétique proportionnelle selon la revendication 9, **caractérisée en ce que** l'élément de soupape cylindrique creux (500b) est formé avec une fente allongée de manière circonférentielle (500a) pour fermer entièrement les trous de soupape (505) par l'élément de soupape (500b) lorsque le premier ressort (7) et le second ressort (516) sont compensés l'un par l'autre, et que la fente (500a) communique avec les trous de soupape lorsque l'élément de soupape cylindrique creux est déplacé en direction du noyau (2) par l'alimentation de la bobine solénoïde (10).

11. Soupape magnétique proportionnelle selon la revendication 9, **caractérisée en ce que** l'élément de soupape cylindrique creux (500b) présente une partie d'extrémité dudit élément formée pour avoir une épaisseur radiale réduite, la partie d'extrémité comprenant une partie formée avec la fente (500a).

12. Soupape magnétique proportionnelle selon la revendication 11, **caractérisée en ce qu'**un rapport entre une somme des constantes du ressort des premier et second ressorts (7, 516) et une zone transversale diamétralement extérieure d'une partie d'extrémité côté siège de soupape de l'élément de soupape cylindrique creux (500b) est égale ou supérieure à 0,05.

13. Soupape magnétique proportionnelle selon la revendication 1, **caractérisée en ce que** le piston (8) présente un diamètre extérieur qui produit un espace prédéterminé entre une paroi intérieure du tuyau (1) et le piston (8).

14. Soupape magnétique proportionnelle selon la revendication 1, **caractérisée en ce que** le noyau (2, 102) et le piston (8) présentent des faces d'extrémité respectives (2a, 8a, 102a) opposées l'une à l'autre, les faces d'extrémité étant des surfaces coniques effilées inclinées avec des pentes identiques.

15. Soupape magnétique proportionnelle selon la revendication 1, **caractérisée en ce que** l'élément de soupape cylindrique creux (6, 306) est réalisé en un matériau qui n'est pas magnétique.

16. Soupape magnétique proportionnelle selon la revendication 1, **caractérisée en ce que** l'arbre (3, 303) présente au moins une rainure circonférentielle (33a) dans une surface de guidage coulissante, sur laquelle surface de guidage l'élément de soupape cylindrique creux (6) coulisse.

17. Soupape magnétique proportionnelle selon la revendication 1, **caractérisée en ce que** le tuyau (1) présente des extrémités ouvertes, chacune faite d'une manière adaptée à un diamètre d'un tuyau correspondant pour le soudage.

18. Soupape magnétique proportionnelle selon la revendication 1, **caractérisée en ce que** l'élément de soupape cylindrique creux (400b, 500b) est formé d'un seul tenant avec le piston (400a, 500d) en une unité monobloc (400, 500).

19. Soupape magnétique proportionnelle selon la revendication 1, **caractérisée en ce que** l'arbre (3) est fixé au noyau (2) par emboutissage, et une caractéristique de débit de la soupape est réglée en sélectionnant la seconde position axiale avant d'effectuer l'emboutissage.

20. Soupape magnétique proportionnelle selon la revendication 1, **caractérisée en ce que** le tuyau (201) présente des joints de tuyauterie (200) fixés à des extrémités ouvertes dudit tuyau.

21. Soupape magnétique proportionnelle selon la revendication 1, **caractérisée en ce que** le noyau (2) est fixé de manière axiale dans le tuyau (1) à une première position axiale, de préférence, par emboutissage, de préférence, avec un sertissage supplémentaire de la paroi du tuyau dans une rainure circonférentielle de positionnement du noyau (2), **en ce que** l'arbre (3) est fixé de manière axiale dans le noyau (2) à une seconde position axiale de préférence par emboutissage, et **en ce que** la seconde position axiale de l'arbre (3) est sélectionnée par rapport à la première position axiale avant d'effectuer l'emboutissage afin de régler de manière sélective la quantité maximale nominale de levée de l'élément de soupape.

22. Soupape magnétique proportionnelle selon la revendication 1, **caractérisée en ce que** le noyau (102) est fixé de manière axiale dans ledit tuyau (101a) à une première position axiale, de préférence, par emboutissage, de préférence, à une butée au niveau d'une extrémité de tuyau, **en ce que** l'arbre (103) est fixé de manière axiale dans le tuyau (101a) à une seconde position axiale, de préférence par emboutissage, de préférence, avec un sertissage supplémentaire de la paroi du tuyau, et **en ce que** la seconde position axiale de l'arbre peut être sélectionnée par rapport à la première position axiale par ledit emboutissage afin de régler de manière sélective la quantité maximale nominale de levée de l'élément de soupape.
